# EUROPÄISCHE PATENTSCHRIFT

(11) **EP 1 502 792 B1**
(45) Veröffentlichungstag und Bekanntmachung des Hinweises auf die Patenterteilung: **29.08.2007**
(21) Anmeldenummer: 04017589.5
(22) Anmeldetag: 24.07.2004
(51) Int. Cl.: B60K 7/00, B60K 17/14

(54) **Antriebseinheit für Flurförderfahrzeuge**
Drive unit for reciprocating floor conveyor
Unité d'entrainement pour chariot de manutention

(30) Priorität: 29.07.2003 DE 10334449
(43) Veröffentlichungstag der Anmeldung: 02.02.2005
(73) Patentinhaber: ZF FRIEDRICHSHAFEN AG, 88038 Friedrichshafen (DE)
(72) Erfinder: Stübner, Frank, 99894 Ernstroda (DE); Brandt, Hermann, 99869 Pferdingsleben (DE); Bald, Dirk, 99867 Gotha (DE); Kurek, Wolfgang, 99894 Friedrichroda (DE)

(56) Entgegenhaltungen:
- EP-A- 0 999 081
- DE-A1- 19 633 316
- DE-A1- 19 637 317
- US-A1- 2003 029 660
- PATENT ABSTRACTS OF JAPAN Bd. 2003, Nr. 03, 5. Mai 2003 (2003-05-05) & JP 2002 321665 A (HONDA MOTOR CO LTD), 5. November 2002 (2002-11-05)

## Beschreibung

Die vorliegende Erfindung betrifft eine Antriebseinheit für Flurförderfahrzeuge, insbesondere für Nieder- und Hochhubwagen, nach dem Oberbegriff des Anspruchs 1.

Derartige als Einradtriebwerk ausgebildete Antriebseinheiten werden bevorzugt für Flurförderfahrzeuge, insbesondere Gehhubwagen, Nieder- und Hochhubwagen eingesetzt, da für diese Anwendungen eine kompakte Bauart erforderlich ist. Dabei ist ein möglichst tiefliegender Schwerpunkt des Fahrzeuges anzustreben um die Kippgefahr zu verringern. Außerdem ist der Einbauraum gering zu halten um die Manövrierfähigkeit des Fahrzeuges zu verbessern. Auf Grund der Tatsache, dass hohe Antriebskräfte und Belastungen auf ein einzelnes angetriebenes Laufrad übertragen werden, sind die Bauteile entsprechend dimensioniert auszulegen, insbesondere das Gehäuse und die Getriebestufe.

Aus der DE 31 33 027 A1 ist zum Beispiel ein Einradtriebwerk bekannt, das ein zweistufiges Getriebe aufweist, wobei auf der Motorwelle ein Ritzel eines Stirnradgetriebes angeordnet ist, wodurch jedoch der Teilkreis durch die erforderliche Materialstärke zwischen Zahnfuß und Aufnahmebohrung relativ groß und demzufolge das Untersetzungsverhältnis relativ klein ist. Daneben ist für eine derartige Bauform ein erhöhter Herstellungsaufwand erforderlich. Da außerdem die Lagerung der nach unten abgehenden Stirnradund Kegelritzelwelle auf Höhe der Felge und des Reifens des Laufrades liegt, kann deren Abstand zur Achsmitte des Getriebes nicht so klein gehalten werden, wie es zum Erreichen eines angestrebten kleinen Schwenkradius wünschenswert ist.

Als besonders nachteilig hat sich bei diesem bekannten Einradtriebwerk herausgestellt, das die Montage und die für Wartungszwecke durchzuführende Demontage einen erhöhten Arbeitsaufwand bedingen.

Um diese Nachteile zu überwinden wurde in der EP 1 285 803 ein Einradtriebwerk vorgeschlagen, das ebenfalls insbesondere für Flurförderfahrzeuge ausgelegt ist und das aus einem Getriebegehäuse mit mindestens einer Getriebestufe, einem angeflanschten Antriebsmotor und einem getriebenen Laufrad besteht. Um den Bauraum möglichst klein zu halten und die Montage und Demontage zu vereinfachen ist hierbei vorgesehen, dass das Laufrad unmittelbar mit einem Getrieberad drehfest verbunden ist und dass das Getrieberad drehbar auf einem koaxial innen liegenden Stützelement aufsitzt. Sofern das Getrieberad drehbar auf einem Gehäusezapfen oder einem drehfest gelagerten Wellenzapfen, der in einem Gehäusedurchbruch aufgenommen ist, gelagert ist, kann eine Flanschwelle mit Lagerelementen entfallen, sodass ein einteiliges Gehäuse verwendet werden kann, das weder einen Deckel noch Verschraubungen benötigt. Bei gleicher Getriebebaugröße kann ferner ein größeres Kegelrad eingesetzt werden, das zur unmittelbaren Krafteinleitung auf das Laufrad eingesetzt werden kann.

Das Getriebe selbst ist zweistufig ausgeführt, wobei die erste Getriebestufe mit einer Stirnradverzahnung dem Antriebsmotor zugeordnet ist, während die zweite Getriebestufe mit einer Kegelradverzahnung dem Laufrad zugeordnet ist. Die beiden Getriebestufen sind durch eine im Gehäuse gelagerte Antriebswelle miteinander verbunden, während das Laufrad drehfest mit dem abtriebsseitigen Kegelrad verbunden ist und ein Laufradkranz und/oder das Kegelrad über Lagerelemente gegenüber dem Gehäusezapfen oder Wellenzapfen abgestützt sind. Da sowohl das Stirnrad als auch das Kegelritzel hierbei auf der Antriebswelle vor dem Einbau festsitzend montiert werden können, wird die Einstellung eines guten Tragbildes erhalten sowie eines vorteilhaften Lagerspiels des spiral- und kreisbogenverzahnten Kegelgetriebes.

Das Gehäuse ist einteilig ausgebildet, wobei eine erste Öffnung zum Antriebsmotor und eine zweite Öffnung zum Laufrad hin vorgesehen ist. Dadurch sollen die Montage und die Demontage des Einradtriebwerks erleichtert werden, wobei die erste Öffnung durch eine Verschraubung mit dem Drehkranzlagerinnenring nach der Montage und die zweite Öffnung durch das Kegelrad und eine einklemmbare Abdeckung verschlossen werden.

Aus der EP 0 400 275 ist schließlich eine Antriebseinheit für ein Flurförderfahrzeug bekannt, die einen Elektromotor, ein zweistufiges Getriebe, ein Antriebsrad und eine Bremse aufweist und die um eine vertikale Achse schwenkbar im Fahrgestell des Flurförderfahrzeuges aufnehmbar ist. Das Antriebsglied der ersten Getriebestufe ist auf der horizontalen Abtriebswelle des Elektromotors angeordnet und das Abtriebsglied der ersten Getriebestufe ist auf einer im Getriebegehäuse gelagerten Ritzelwelle der zweiten Getriebestufe angeordnet, während das Abtriebsglied der zweiten Getriebestufe auf einer Abtriebswelle angeordnet ist, deren eines das Antriebsrad aufnehmende Ende aus dem Getriebegehäuse herausragt; der Elektromotor ist hierbei achsparallel zur Ritzelwelle und zur Abtriebswelle angeordnet.

Ein weiterer wesentlichen Stand der Technik ist durch JP 2002 321665 gegeben.

Im Hinblick auf eine vereinfachte Wartung und insbesondere auf einen leichteren Zugang zur Bremse ist das Abtriebsglied der ersten Getriebestufe als Bremstrommel einer Trommelbremse ausgestaltet. Die Antriebseinheit für dieses als Gehhubwagen ausgebildetes Flurförderfahrzeug ist mit dem Fahrgestell über einen zweiteiligen Schwenkzapfen verbunden, der den Innenring eines Schwenklagers aufnimmt, sodass das Getriebegehäuse um die vertikale Schwenkachse verdrehbar am Fahrgestell angeordnet ist.

Auf der Abtriebswelle des Elektromotors ist eine erste Zahnriemenscheibe aufgesetzt, während eine zweite Zahnriemenscheibe drehfest und axial unverschiebbar auf einer im Getriebegehäuse und in einem Lagerschild mittels Wälzlagern drehbar gelagerten Ritzelwelle aufgesetzt ist. Deren Ritzel kämmt mit einem Stirnrad, das drehfest und axial nicht verschiebbar auf einer Abtriebswelle sitzt, die mittels eines Wälzlagers drehbar im Getriebegehäuse gelagert ist. Das dem Stirnrad abgewandte Ende ragt aus dem Getriebegehäuse heraus und trägt das Antriebsrad. Die Motorachse, die Schwenkachse und die Achse des Antriebsrades liegen hierbei in einer senkrechten Ebene.

Die erste Zahnriemenscheibe und die zweite Zahnriemenscheibe sind über einen Zahnriemen miteinander verbunden, wobei diese Teile die erste Getriebestufe bilden. Die Bremse ist in die zweite Zahnriemenscheibe integriert, die durch ein Ritzel und das Stirnrad gebildet wird, wobei die Bremse als eine federbelastete Trommelbremse ausgebildet sein kann, die durch die Deichsel des Gehhubwagens betätigt werden kann.

Wenn die erste Getriebestufe als Stirnradtrieb ausgeführt ist kann das letzte Stirnrad als Bremstrommel ausgebildet werden. Bei entsprechender Dimensionierung des Durchmessers und der Breite der Zahnriemenscheibe bzw. des Stirnrades wird der Bauraumbedarf durch die Bremse nicht vergrößert.

Aufgabe der vorliegenden Erfindung ist es, eine Antriebseinheit für ein Flurförderfahrzeug zu schaffen, die einen vereinfachten Aufbau aufweist, sodass die Herstellungskosten gesenkt werden können, die Montagezeit verkürzt und der für die Wartung erforderliche Aufwand verringert wird.

Ausgehend von einer Antriebseinheit der eingangs genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Diese neue Antriebseinheit kann sowohl ein Stirnradgetriebe als auch ein Riemen-Getriebe aufweisen und eignet sich insbesondere als Antrieb für Nieder- und Hochhubwagen.

Im Folgenden wird die Erfindung an Hand der Zeichnung näher erläutert, in der zwei vorteilhafte Ausführungsbeispiele dargestellt sind; es zeigen:
- Fig. 1: einen Schnitt durch eine als Stirnradgetriebe ausgeführte Antriebseinheit und
- Fig. 2: eine als Riemen-Getriebe ausgeführte Antriebseinheit.

Derartige Antriebseinheiten sind dem Fachmann gut bekannt, sodass im Folgenden nur die für das Verständnis der Erfindung erforderlichen Bauteile beschrieben werden.

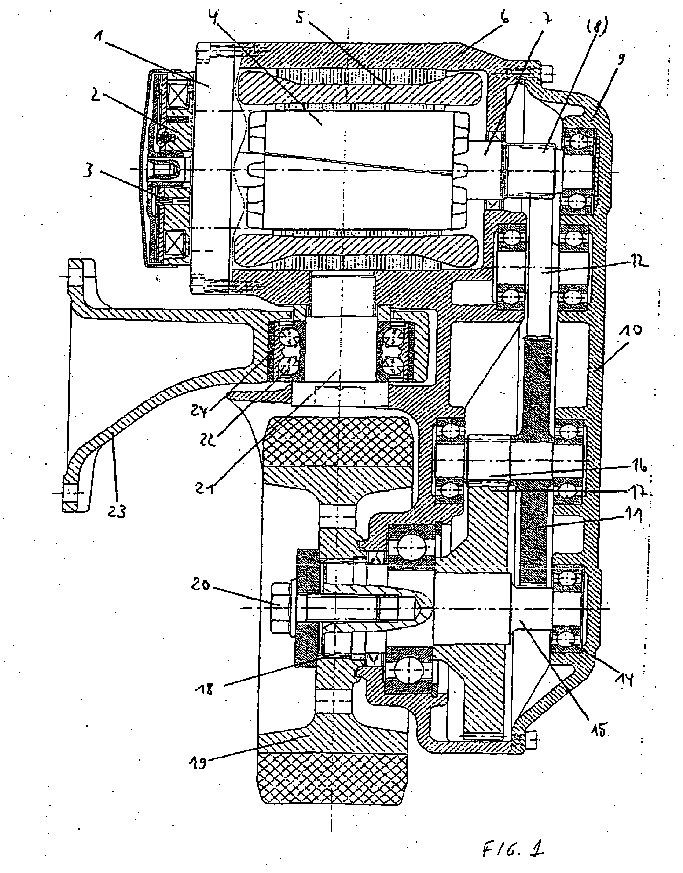

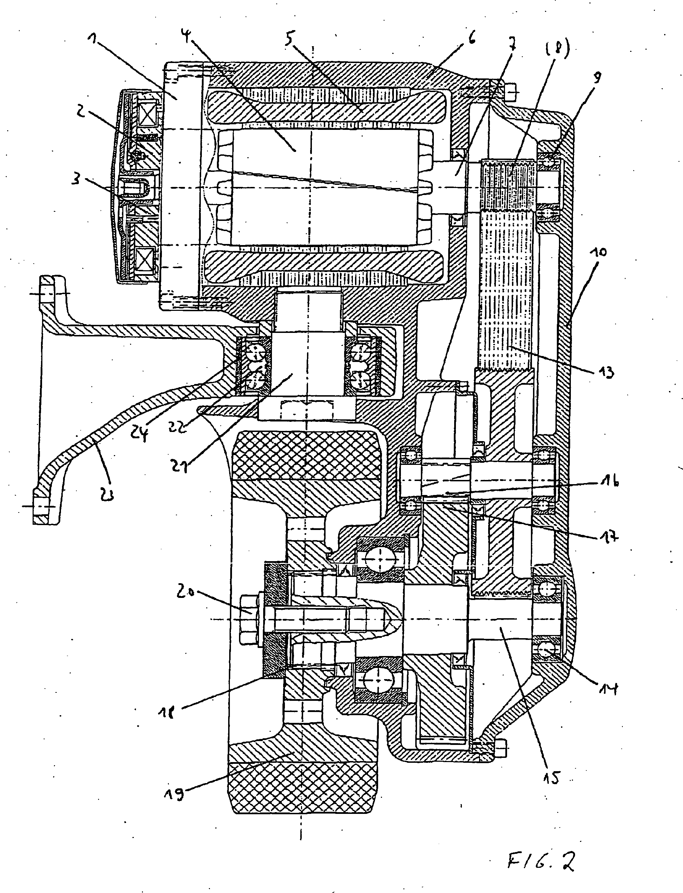

Die Bremse 3 ist bei den beiden Beispielen eine elektromagnetische Bremse, deren Magnetkörperträger 2 einstückig mit dem Motor-B-Schild 1 hergestellt wird, wodurch der Vorteil erzielt wird, dass die Bearbeitungskosten für zwei bisher erforderliche Trennflächen entfallen. Die in den beiden Ausführungsbeispielen gemäss Fig. 1 und 2 gezeigte Bremse 3 ist auf Grund ihrer Lage wartungsfreundlich, da sie leicht zugänglich ist und da keinerlei Bremsbetätigungsmechanik mehr erforderlich ist, die die Erreichbarkeit behindert. Für die Wartung der Bremse muss nur die Fahrzeugverkleidung geöffnet werden, die Antriebseinheit braucht nicht entfernt bzw. demontiert werden.

Der Elektromotor 4 ist in beiden Varianten als AC-Motor ausgeführt, wodurch im Zusammenhang mit dem angestrebten Einsatzzweck der Vorteil erzielt wird, dass dieser auf Grund der hohen Drehzahlen und der geringen Anforderungen an das Drehmoment sehr kompakt aufgebaut und damit kostengünstig hergestellt werden kann. Der Stator 5 ist dabei direkt in das Getriebegehäuse 6 integriert, zum Beispiel eingepresst, sodass das bisher erforderliche Motorgehäuse entfallen kann.

Die Motorwelle 7 und das Antriebsritzel 8 sind gemäß der Erfindung einstückig ausgebildet und damit ebenfalls kostengünstiger herstellbar.

Die Motorwelle 7 ist über Lager 9 im Getriebegehäusedeckel 10 gelagert, wodurch der Vorteil erzielt wird, dass sich die Lagerbasis für den Verzahnungseingriff der ersten Getriebestufe bei dem Ausführungsbeispiel nach Fig. 1 günstig auf die Leistungsübertragung und das Geräuschverhalten auswirkt; bei dem Ausführungsbeispiel nach Fig. 2 wirkt sich die Lagerbasis für den Verzahnungseingriff der ersten Getriebestufe günstig auf die Aufnahme der Riemenspannung aus.

Bei dem in Fig. 1 dargestellten Ausführungsbeispiel ist zwischen dem Antriebsritzel 8 und dem Abtriebsrad 11 ein Stirnrad 12 aus einem Kunststoff zwischengeschaltet, das einerseits den Abstand überbrückt und andererseits in vorteilhafter Weise die Geräuschentwicklung einschränkt, die vor allem von der Verzahnung in der ersten Stirnradstufe ausgeht, bedingt durch die hohen Eingangsdrehzahlen. Ein Zwischenrad aus Kunststoff ist besonders kostengünstig herstellbar.

Bei dem in Fig. 2 dargestellten Ausführungsbeispiel ist statt des herkömmlichen Riemens mit Spanneinrichtung ein durch vorzugsweise eingegossene Polyamidfäden verstärkter Riemen 13 vorgesehen, der den Vorteil aufweist, eine Eigennachspannung zu besitzen, die sich auf die erforderliche Riemenspannung selbständig einstellt, sodass immer die optimale Vorspannung zur Verfügung steht und damit die bisher erforderliche Spanneinrichtung entfällt.

Die Lagerung der Abtriebswelle 15 ist bei den beiden Ausführungsbeispielen gemäss Fig. 1 und 2 im Gegensatz zu den herkömmlichen Lagerungen derart gestaltet, dass durch die breite Lagerbasis, die dadurch geschaffen wird, dass das Lager 14 im Gehäusedeckel 10 eingesetzt ist, eine sehr günstige Leistungsaufnahme gewährleistet ist, insbesondere für hohe Momente, und zugleich der Verzahnungseingriff in der Abtriebsstufe 16, 17 optimiert ist, wodurch eine verbesserte Laufruhe erzielt wird.

Ebenfalls bei beiden Ausführungsbeispielen, wie sie in den Fig. 1 und 2 dargestellt sind, ist das Laufrad 19 über eine Profilverbindung 18 mit der Abtriebswelle 15 verbunden, wodurch, verglichen mit den bisher üblichen Verschraubungsvarianten mit Flansch und Felge, der Vorteil erzielt wird, dass die Verbindung erheblich kostengünstiger zu realisieren ist, da das Rohteil der Abtriebswelle 15 einfacher zu fertigen und zu bearbeiten ist; ferner ist es vorteilhaft, dass im Fall einer notwendigen Wartung und/oder Reparatur durch Lösen nur einer Schraube 20 das Laufrad 18 abgenommen werden kann.

Für beide Ausführungsbeispiele gilt, dass der Träger 23, der den Fahrzeugrahmen mit dem Getriebe verbindet, in einfacher und kostengünstiger Weise mit Hilfe eines Gewindebolzens 21 in das Getriebegehäuse 6 eingeschraubt wird. Diese Verbindung wirkt sich in sehr vorteilhafter Weise auf die Einstellung der Vorspannung des Lagers 22 aus und erleichtert die Handhabung im Fall einer Wartung.

Weiterhin ist bei beiden Ausführungsbeispielen eine Buchse 24 aus einem elastischen Material zwischen das Lager 22 und den Träger 23 eingesetzt, wodurch der große Vorteil erzielt wird, dass die Schwingungsanregungen bzw. Schwingungsübertragungen zwischen Fahrzeug und Getriebe getrennt sind bzw. unterbrochen sind, wodurch eine erhebliche Komfortsteigerung des gesamten Fahrzeuges für die Bedienungsperson erreicht und das allgemeine Geräuschverhalten positiv beeinflusst wird.

Die erfindungsgemäß ausgestaltete Antriebseinheit, die sowohl ein Stirnradgetriebe als auch ein Riemengetriebe aufweisen kann, bietet also eine Vielzahl von Vorteilen hinsichtlich der Verringerung der Fertigungskosten, der Erhöhung der Laufruhe, der Vereinfachung der Wartung und der Reduzierung an Bauteilen.

Der Einsatz gleicher Lager 9 an Motorwelle, SR und Antriebsstufe ergibt eine Reduzierung der Fertigungskosten.

### Bezugszeichen

- 1: Motor-B-Schild
- 2: Magnetkörperträger
- 3: Bremse
- 4: AC-Motor
- 5: Stator
- 6: Getriebegehäuse
- 7: Motorwelle
- 8: Antriebsritzel
- 9: Lager
- 10: Deckel
- 11: Abtriebsrad
- 12: Stirnrad
- 13: Riemen
- 14: Lager
- 15: Abtriebswelle
- 16: Abtriebsstufe
- 17: Abtriebsstufe
- 18: Profilverbindung
- 19: Laufrad
- 20: Schraube
- 21: Bolzen
- 22: Lager
- 23: Träger
- 24: Buchse

## Patentansprüche

1. Antriebseinheit für Flurförderfahrzeuge, insbesondere für Nieder- und Hochhubwagen, mit einem Elektromotor, einer Bremse, einem Getriebe und mit einem Laufrad, wobei:
- der Elektromotor (4) ist ein AC-Motor,
- die Bremse (3) ist eine elektromagnetische Bremse,
- der Motor-B-Schild (1) und der Magnetkörperträger (2) der Bremse sind einstückig ausgebildet,
- der Stator (5) ist in das Getriebegehäuse (6) integriert,
- die Motorwelle (7) und das Antriebsritzel (8) sind einstückig ausgebildet,
- ein Lager (9) für die Motorwelle (7) ist im Getriebegehäusedeckel (10) angeordnet,
- ein Lager (14) für die Abtriebswelle (15) ist im Getriebegehäusedeckel (10) angeordnet,
- das Laufrad (19) ist über eine Profilverbindung (18) mit der Abtriebswelle (15) verbunden.

2. Antriebseinheit nach Anspruch 1, **dadurch gekennzeichnet, dass** das Getriebe ein Stirnradgetriebe ist.

3. Antriebseinheit nach Anspruch 1, **dadurch gekennzeichnet, dass** das Getriebe ein Riemengetriebe ist.

4. Antriebseinheit nach Ansprüchen 1 und 2, **dadurch gekennzeichnet , dass** zwischen dem Antriebsritzel (8) und dem Abtriebsrad (11) ein Stirnrad (12) aus einem Kunststoff eingesetzt ist.

5. Antriebseinheit nach Ansprüchen 1 und 3, **dadurch gekennzeichnet, dass** der Riemen (13) eingegossene Verstärkungsfasern und/oder -fäden aufweist.

6. Antriebseinheit nach einem oder mehreren der vorhergehenden Ansprüche, **dadurch gekennzeichnet, dass** der Träger (23), der den Fahrzeugrahmen mit dem Getriebe verbindet, mittels eines Gewindebolzens (21) am Getriebegehäuse (10) befestigt ist.

7. Antriebseinheit nach einem oder mehreren der Vorhergehenden Ansprüche, **dadurch gekennzeichnet , dass** zwischen dem Lager (22) und dem Träger (23) eine Buchse aus einem elastischen Material eingesetzt ist.

## Claims

1. The invention relates to a drive unit for floor conveyors, especially for low-lift and high-lift trucks, with an electric motor, a brake, a transmission, and a wheel, with
- the electric motor (4) being an AC motor,
- the brake (3) being an electromagnetic brake,
- the motor's B shield (1) and the magnet body carrier (2) of the brake being a single piece,
- the stator (5) being integrated into the transmission housing (6),
- the motor shaft (7) and the drive pinion (8) being a single piece,
- a bearing (9) for the motor shaft (7) being arranged in the transmission housing cover (10),
- a bearing (14) for the output shaft (15) being arranged in the transmission housing cover (10), and
- the wheel (19) being connected to the output shaft (15) via a profiled connection (18).

2. A drive unit according to claim 1, **characterized in that** the transmission is a transmission with spur gears.

3. A drive unit according to claim 1, **characterized in that** the transmission is a belt transmission.

4. A drive unit according to the claims 1 and 2, **characterized in that** a plastic spur gear (12) is inserted between the drive pinion (8) and the output gear (11).

5. A drive unit according to the claims 1 and 3, **characterized in that** the belt (13) features potted reinforcing fibers.

6. A drive unit according to one or several of the preceding claims, **characterized in that** the member (23) connecting the vehicle chassis with the transmission is mounted to the transmission housing (10) by means of a threaded bolt (21).

7. A drive unit according to one or several of the preceding claims, **characterized in that** an elastic bushing is inserted between the bearing (22) and the member (23).

## Revendications

1. Unité de transmission pour engins de manutention, en particulier pour gerbeurs et transpalettes, dotés d'un moteur électrique, d'un frein, d'une boîte de vitesses et d'une roue mobile, sachant que :
- le moteur électrique (4) est un moteur à CA,
- le frein (3) es tun frein électromagnétique,
- la plaque de moteur B (1) et le porte-corps aimanté (2) du frein sont réalisés en une seule pièce,
- le stator (5) est intégré dans le carter de la boîte de vitesses (6),
- l'arbre moteur (7) et le pignon d'entrée (8) sont réalisés en une seule pièce,
- un roulement (9) pour l'arbre moteur (7) est dispoé dans le couvercle de la boîte de vitesses (10),
- un roulement (14) pour l'arbre de sortie (15) est disposé dans le couvercle de la boîte de vitesses (10),
- la roue mobile (19) est liée par l'intermédiaire d'un raccordement de profil (18) à l'arbre de sortie (15).

2. Unité de transmission selon la revendication 1, **caractérisée en ce que** la boîte de vitesses est une transmission à pignons cylindriques.

3. Unité de transmission selon la revendication 1, **caractérisée en ce que** la boîte de vitesses est une transmission à courroies.

4. Unité de transmission selon les revendications 1 et 2, **caractérisée en ce que** entre le pignon d'entrée (8) et le pignon de sortie (11) est interposé un pignon cylindrique (12) en plastique.

5. Unité de transmission selon les revendications 1 et 3, **caractérisée en ce que** la courroie (13) comporte des fibres et/ou fils de renfort moulés.

6. Unité de transmission selon une ou plusieurs des revendications précédentes, **caractérisée en ce que** le support (23), reliant le châssis du véhicule à la boîte de vitesses, est fixé au carter de la boîte de vitesses (10) à l'aide d'un axe fileté (21).

7. Unité de transmission selon une ou plusieurs des revendications précédentes, **caractérisée en ce que** entre le roulement (22) et le support (23) est interposée une douille d'un matériau élastique.
